Europäisches Patentamt

European Patent Office

Office européen des brevets

(19)

(11) **EP 1 225 545 A1**

(12) # DEMANDE DE BREVET EUROPEEN

(43) Date de publication:
**24.07.2002 Bulletin 2002/30**

(51) Int Cl.⁷: **G06T 7/20**

(21) Numéro de dépôt: **02075218.4**

(22) Date de dépôt: **18.01.2002**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **23.01.2001 FR 0100881**

(71) Demandeur: **Koninklijke Philips Electronics N.V.**
**5621 BA Eindhoven (NL)**

(72) Inventeur: **Allouche, Cyril**
**75008 Paris (FR)**

(74) Mandataire: **Chaffraix, Jean**
**Société Civile S.P.I.D.**
**156, Boulevard Haussmann**
**75008 Paris (FR)**

(54) **Procédé de traitement d'images permettant de suivre la déformation d'un organe dans le temps**

(57)    L'invention concerne un procédé de traitement d'image appartenant à une séquence d'au moins deux images IM(t1), IM(t2) présentant une surface représentative d'un organe ou d'une partie d'organe déformable dans le temps et appelée surface d'organe, ladite surface incluant des points caractéristiques, notés points de marquage MP, qui se correspondent d'une image à l'autre de la séquence. Le procédé inclut une étape CALC de calcul des positions des points de marquage MP(t1) et MP(t2), une étape DET de détermination des paramètres d'une expression mathématique explicite f(t1/t2) de la déformation de l'organe observée entre les deux images. Ladite détermination est réalisée à partir des positions d'un ensemble MP' de points de marquage sur les deux images. L'invention propose aussi des outils conviviaux de suivi de la déformation et de ses éventuelles anomalies pathologiques.

Application : Images marquées par modulation spatiale de résonance magnétique.

FIG.1

EP 1 225 545 A1

## Description

L'invention concerne un procédé de traitement d'images appartenant à une séquence d'au moins deux images présentant une surface représentative d'un organe ou d'une partie d'organe déformable dans le temps et appelée surface d'organe, ladite surface incluant des points caractéristiques, notés points de marquage, qui se correspondent d'une image à une autre de la séquence. Cette invention concerne aussi un appareillage de traitement d'images pour mettre en oeuvre le procédé décrit ci-dessus.

L'invention trouve son application dans le domaine du traitement d'images médicales. Le procédé est en particulier applicable sur les images d'organe marqué par modulation spatiale de résonance magnétique. Ce marquage est visible sur les images sous la forme de lignes de marquage ayant des points d'intersection. Les lignes de marquage se déforment en suivant la déformation de l'organe. Lesdits points d'intersection sont alors choisis comme points de marquage car les correspondances de ces points d'une image à l'autre sont aisément détectées.

Un procédé de traitement d'images d'organe marqué par modulation magnétique en vue de quantifier la déformation de l'organe est déjà connu de l'état de la technique par la publication de Matthias Stuber et al. intitulée "Quantification of the local heartwall motion by magnetic resonance myocardial tagging". Dans ce document, les points d'intersection entre les lignes de marquage sont déterminés par des algorithmes d'approximation basés sur un calcul de potentiel (en anglais, « snakes »). Par ailleurs, ce procédé met en oeuvre une moyenne des angles par rapport au centre de gravité pour quantifier la rotation et la contraction.

Ce procédé présente des inconvénients. D'abord, les algorithmes d'approximation basés sur un calcul de potentiel n'autorisent pas une détermination précise des positions des lignes de marquage. Ensuite, le procédé utilisé par Stuber et al. à la suite de la détermination des lignes de marquages ne s'intéresse qu'à un calcul de la trajectoire des points de proche en proche à partir des trajectoires des points de marquage sans avoir une approche globale de la déformation de l'organe. La méthode utilisée met en oeuvre une moyenne des angles par rapport au centre de gravité pour quantifier la rotation et la contraction. Le résultat est imprécis car soumis aux erreurs locales de détermination des lignes de marquage et mathématiquement incorrect. De plus, ce procédé ne peut être automatisé.

Un but de l'invention est de fournir un procédé pour quantifier la déformation de l'organe sans subir les erreurs locales de détermination des lignes de marquage.

En effet, un procédé conforme au paragraphe introductif est remarquable selon l'invention en ce qu'il comprend des étapes de :

calcul des positions des points de marquage sur au moins, deux images successives ou non, détermination des paramètres d'une expression mathématique explicite de la déformation de l'organe ou de la partie de l'organe observée entre les deux images à partir des positions d'un ensemble de points de marquage sur les deux images, ledit ensemble de points de marquage contenant les points de marquage présents sur la surface de l'organe ou au moins les points de marquage présents sur une partie de la surface de l'organe.

La régularisation par une expression mathématique explicite pour quantifier la déformation remplace l'approche par interpolation du mouvement en chaque point qui est la méthode choisie dans le document de l'état de la technique cité. Les paramètres de l'expression sont obtenus à partir d'un ensemble de points de marquage contenant les points de marquage présents sur la surface de l'organe ou au moins les points de marquage présents sur une partie de la surface de l'organe. L'expression mathématique obtenue est alors au moins valable en tout point de cette surface ou de ladite partie de cette surface. Cette approche estime un mouvement au sens très rigoureux des moindres carrés avec une régularisation mathématique explicite. Cette régularisation corrige le bruit.

L'invention s'applique particulièrement au coeur qui présente entre autres une déformation en rotation et en contraction. Dans une mise en oeuvre particulière de l'invention, l'expression mathématique est définie dans un repère polaire. Le centre du repère est défini, soit automatiquement par calcul d'un barycentre, soit manuellement par un utilisateur. Le barycentre peut alors être défini comme le barycentre de l'image ou comme le barycentre d'une surface définie, par exemple, par segmentation de l'image. La position de ce centre peut être approximative sans affecter la détermination de l'expression mathématique de manière sensible. L'expression mathématique sera avantageusement choisie comme pouvant exprimer des déformations proches de celles attendues pour l'organe imagé. Ainsi les similitudes peuvent rendre compte de la déformation rigide du coeur. Dans une mise en oeuvre préférée de l'invention, l'expression mathématique est dérivée de l'expression d'une similitude, c'est-à-dire est de la forme, dans le repère centré de centre $o$ :

$$f(z) = \left| z - o \right| \underbrace{\left( \sum_{\substack{k=-N \\ k \neq 0}}^{N} a_k e^{ik\theta} \right)}_{f_o(\theta)} + d \quad , \quad \theta = arg(z-o), \quad (a_k) \in C^{2N+1}$$

Cette expression particulière permet en effet de quantifier avec une grande fidélité la déformation réelle du coeur.

Cette expression ne permet cependant pas de rendre compte de la dépendance en rayon de la déformation. Dans un mode particulier de mise en oeuvre, un terme correctif fonction du rayon et de l'angle polaire, est introduit dans l'expression mathématique de la déformation, ledit terme correctif incluant des paramètres déterminés a posteriori de la détermination de la première expression mathématique à partir d'un ensemble de points de marquage sur les deux images. Le procédé de régularisation se fait alors en deux étapes : calcul des $a_k$ puis correction radiale. Ces deux étapes sont itérés jusqu'à convergence, obtenue en général après 2 ou 3 itérations.

L'expression mathématique obtenue inclut un certain nombre de paramètres représentant des déformations rigides et des déformations élastiques de l'organe. La connaissance de ces paramètres est Importante pour la détection des anomalies dans le comportement de l'organe par un praticien. En particulier, un appareillage pour mettre en oeuvre le procédé selon l'invention comprend des moyens d'extraction des paramètres de l'expression mathématique de la déformation correspondant à des déformations rigides et des moyens de visualisation de l'évolution de ces paramètres au cours de la séquence.

Le praticien peut aussi souhaiter connaître la déformation d'une structure particulière de l'organe, par exemple une structure visible sur l'image sous la forme d'un contour. Dans un mode de réalisation particulier, l'appareillage de traitement d'images comprend des moyens de définition d'une structure linéique sur une image de la séquence, des moyens d'application de l'expression mathématique de la déformation à ladite structure linéique et des moyens de visualisation de la déformation subie par ladite structure linéique.

La structure linéique peut être définie automatiquement ou être définie manuellement par le praticien, sur une des images de la séquence. La déformation de cette structure peut être suivie d'une image à la suivante de la séquence grâce à l'expression mathématique déterminée selon l'invention. La structure linéique peut ainsi suivre un contour visible sur l'image et représentatif d'une structure physique de l'organe (par exemple, l'epicarde ou l'endocarde), l'application de la déformation permet alors de suivre les mouvements de la structure physique. La structure linéique peut aussi permettre de réaliser une segmentation de limage, ladite segmentation sera alors suivie le long de la séquence avec le suivi de la déformation de la structure linéique. Une telle segmentation peut permettre de définir la surface sur laquelle l'expression mathématique est déterminée : la quantité de calculs est alors réduite et la détermination de l'expression mathématique est plus précise car pouvant être réalisée sur des surfaces plus restreintes. La structure linéique peut être toute structure incluse non strictement sur la surface sur laquelle est définie l'expression mathématique de la déformation.

L'invention sera mieux comprise à la lumière de la description suivante de quelques modes de réalisation, faite à titre d'exemples et en regard des dessins annexés, dans lesquels :

- la figure 1 représente un diagramme d'un procédé de traitement d'images selon l'invention,
- la figure 2 présente une image CSPAMM d'un coeur, ladite image appartenant à une séquence d'images et étant prise après l'impulsion de magnétisation,
- la figure 3 représente un appareillage de traitement d'images selon une mise en oeuvre particulière de l'invention,
- les figures 4a et 4b représentent respectivement l'évolution temporelle des paramètres de rotation et de contraction durant trois séquences d'images, chacune étant prises en des endroits différents du coeur,
- la figure 5 représente le suivi de la déformation d'un cercle sur lequel est appliqué l'expression déterminée de la déformation au cours de la séquence.
- la figure 6 représente un appareil de saisie et de traitement d'images selon l'invention.

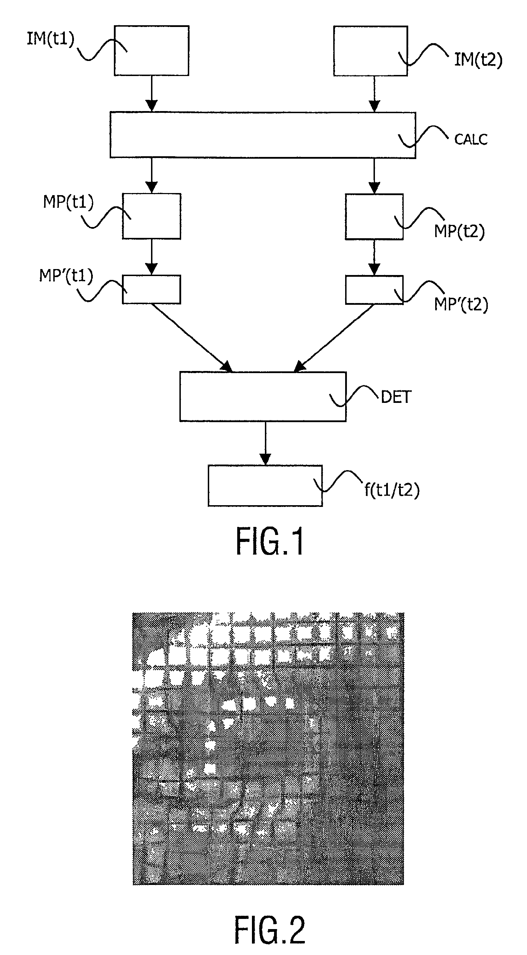

La figure 1 représente un diagramme d'un procédé de traitement d'images selon l'invention. Ledit procédé est applicable sur des images appartenant à une séquence d'images d'au moins deux images IM(t1) et IM(t2) prises à deux instants t1 et t2 d'un organe ou d'une partie d'un organe amené à se déformer dans le temps. Ledit organe ou ladite partie de l'organe étant visible sur les images sous la forme d'une surface appelée surface de l'organe, ladite surface incluant des points caractéristiques dont les correspondances sont déterminées d'une image à une autre de la séquence, lesdits points caractéristiques sont notés points de marquage. Ledit organe ou ladite partie d'organe peut, par exemple, être marqué par modulation spatiale de résonance magnétique. Dans la suite, l'invention est décrite plus particulièrement dans le cas de ce marquage par modulation spatiale de résonance magnétique.

La technique de marquage par modulation spatiale de résonance magnétique inclut en particulier les techniques SPAMM et CSPAMM permettant d'obtenir des images où le marquage est visible sur les images suivant des lignes de marquage qui peuvent être de différentes géométries lorsqu'elles sont générées dans l'organe (droites, courbes...). Lesdites lignes de marquage se déforment en suivant la déformation matérielle de l'organe. Sur les images obtenues grâce aux techniques évoquées ci-dessus, les lignes correspondant aux minima de magnétisation spatiale sont des lignes sombres et sont aisément repérables.

La modulation spatiale de résonance magnétique est en général utilisée en prenant des séries d'images de l'organe marqué à des temps successifs et réguliers. Ces séries d'images sont dénommées séquences d'images et la déformation de l'organe est observée grâce à la déformation des lignes de marquage qui constituent une sorte de trame attachée à l'organe. Ladite trame peut avoir divers aspects : droites parallèles, grille constituée de droites suivant deux directions... Une technique dénommée 'Slice-Following' permet de suivre la déformation d'une section de l'organe même si le plan de cette section se déplace dans une direction substantiellement perpendiculaire à ce plan pendant la séquence.

Dans le cas d'une déformation périodique de l'organe, plusieurs séquences d'images du même organe prises pour des déformations similaires successives montrent la même déformation sur chaque image similaire, c'est-à-dire, échantillonnée au même instant au sein de la période de déformation. Dans ce cas, les images similaires peuvent être combinées de manière à ce que les trames des deux images soient visibles sur la nouvelle image résultant de la combinaison. On définit ainsi une nouvelle séquence d'images en effectuant cette combinaison sur l'ensemble des images de la séquence. Cette nouvelle séquence contient en général plus d'information que les séquences d'origine plus simples.

En fonction des temps d'acquisition des séquences qui dépendent du marquage choisi, il peut être avantageux, soit de travailler sur une seule séquence d'images de l'organe marqué avec un marquage complexe, soit de travailler sur une combinaison de plusieurs séquences d'images (généralement deux) de l'organe chaque fois marqué avec un marquage simple, ladite combinaison définissant une nouvelle séquence utilisée ensuite dans le procédé de traitement d'images selon l'invention.

La figure 2 présente une image d'un coeur, ladite image appartenant à une séquence d'images et étant prise environ 9 ms après l'impulsion de magnétisation. Deux ensembles de lignes parallèles correspondant à des minima d'intensité lumineuse sont observés, les lignes parallèles d'un ensemble étant perpendiculaire aux lignes parallèles de l'autre ensemble. La séquence d'images dont est tirée cet exemple présente ainsi des lignes de marquage suivant deux directions distinctes et peut, ainsi, être le résultat, soit d'une saisie directe d'une séquence d'images de l'organe marqué suivant les deux directions, soit de la combinaison de deux saisies de séquences, chacune des deux séquences étant marquées suivant une des deux directions. Deux types de lignes de marquage peuvent être utilisées dans un procédé suivant l'invention. Sur la figure 2, les lignes de marquage correspondant à des minima d'intensité, c'est-à-dire à des minima de résonance magnétique sont facilement repérables. Les lignes de marquage correspondant à des maxima d'intensité et correspondant à des maxima de résonance magnétique sont cependant également détectables, même si leur détection est moins aisée. Par exemple, par dérivation du profil d'intensité de limage il est possible de localiser les lignes correspondant aux maxima de magnétisation. L'utilisation de ces deux types de lignes de marquage augmente l'information sur l'image car la trame du marquage est plus serrée : le nombre de points d'intersection entre lignes de marquage et donc le nombre de points de marquage est plus important.

A propos de la qualité des prises d'images d'une séquence, la technique CSPAMM permet notamment d'obtenir un contraste persistant sur une séquence. Cela est en particulier utile dans le cas où les lignes de marquage correspondant aux maxima de résonance magnétique sont utilisées, le contraste persistant aidant au repérage des minimums d'intensité.

Le procédé de traitement d'images suivant l'invention traite les images où sont présents des points de marquage pour lesquels il est possible d'établir des correspondances d'une image à l'autre. Dans le cas de la modulation spatiale de résonance magnétique, les lignes de marquage sont telles qu'il existe des points d'intersection entre plusieurs lignes de marquage. Il est aisé d'établir des correspondances d'une image à l'autre pour ces points d'intersection qui sont nommés par la suite points de marquage MP. Ils peuvent être des points d'intersection entre lignes de marquage de toute forme et peuvent être directement visibles sur la trame de marquage ou n'être visible qu'après une combinaison de plusieurs séquences, donnant une nouvelle séquence d'images.

Le procédé selon l'invention inclut une première étape de calcul CALC des positions des points de marquage. Cela peut, dans l'exemple de la modulation spatiale de résonance magnétique, être réalisé par utilisation du procédé décrit dans la demande de brevet incluse par référence PHF000116. Dans cette demande de brevet des points candidats pour appartenir à une ligne de marquage donnée sont détectés avant que des moyens de prévision du mouvement de la ligne de marquage soient utilisés pour identifier la ligne de marquage et les points lui appartenant et qu'une équation de la ligne ne soit calculée. Une fois les équations des lignes de marquage déterminées, le calcul des positions des points de marquage est aisé. Les points de marquage MP(t1) et MP(t2) sont les points pour lesquels une correspondance est établie d'une image IM(t1) à l'image IM(t2), les deux instants t1 et t2 pouvant être ou non successifs dans la séquence d'images et t1 pouvant être indifféremment postérieur ou antérieur à t2.

Le procédé selon l'invention inclut ensuite une étape de détermination DET d'une expression mathématique explicite f de la déformation de l'organe ou de la partie de l'organe observée entre l'image IM(t1) et IM(t2) à partir d'un ensemble MP' de points de marquage dont les positions sont définies par MP'(t1) sur l'image IM(t1) et MP'(t2) sur l'image IM(t2). Lesdits ensembles MP' sont inclus non strictement dans les ensembles MP des points de marquage et incluent les points de marquage présents sur la surface de l'organe ou au moins ceux présents sur une partie de cette surface. Les paramètres de l'expression mathématique sont généralement déterminés par approximation aux moindres carrés à partir des positions des points de marquage dont les positions sont connues sur les deux images et donc, dont le déplacement est connu entre t1 et t2. L'expression mathématique peut, par exemple, être une similitude qui rend compte des déformations rigides.

Dans un mode de réalisation particulier, l'expression mathématique de la déformation est définie dans le plan complexe. La déformation peut être définie dans un repère polaire. Dans le cas particulier où l'organe est un coeur, il est aisé de définir un centre positionné approximativement au centre de gravité de la surface de l'organe telle que vue sur l'image.

Dans le mode de réalisation préféré de l'invention, l'expression mathématique est dérivée d'une similitude que l'on peut écrire sous une forme relative à un point *o* choisi de manière quelconque, mais généralement choisi comme étant approximativement le barycentre de la surface observée :

$$f(z) = |z-o|(ae^{i\theta}) + d, \ \theta = arg(z-o).$$

L'expression de la similitude est modifiée en introduisant une série de Fourier dans l'expression pour rendre compte de déformations plus élastiques qu'une simple similitude :

$$f(z) = |z-o| \underbrace{\left( \sum_{\substack{k=-N \\ k\neq 0}}^{N} a_k e^{ik\theta} \right)}_{f_o(\theta)} + d \quad , \quad \theta = arg(z-o), \quad (a_k) \in C^{2N+1}$$

Cette expression rend compte d'une déformation semi-élastique globale dans un repère centré. Elle est définie par 2x(2N+1)+2 paramètres réels qui sont définis à partir des points de marquage de l'ensemble MP'. Ces paramètres sont en général surévalués car il y a plus de points de marquage dans MP' que de paramètres. C'est en particulier le cas lorsque les lignes de marquage correspondant aux maxima de résonance magnétique sont utilisées, le nombre de points d'intersection entre les lignes étant alors important. La surévaluation des paramètres permet de lisser le bruit.

Dans le cas du coeur, l'endocarde est notablement plus contractile que l'éplcarde et par conséquent, plus on approche du centre du myocarde, plus l'amplitude du mouvement radial est importante. Un terme correctif fonction du rayon et l'angle polaire est avantageusement ajouté a posteriori à la détermination de l'expression mathématique explicite f pour ajouter une dépendance en rayon. Ce terme correctif est lui aussi déterminé en utilisant les positions des points de marquage MP' sur les deux images mais cette détermination est réalisée après la détermination des paramètres $a_k$ de la déformation f(z).

Dans une mise en oeuvre avantageuse, le terme correctif est défini par secteurs angulaires s de l'image et est de la forme :

$$\gamma(r,\theta) = \sum_s \left( \gamma_s(r) \frac{\prod_{k\neq s}(\theta - \theta_k)}{\prod_{k\neq s}(\theta_s - \theta_k)} \right) .$$

Le terme $\gamma_s(r)$ est un polynôme en r indépendant de $\theta$ défini sur le secteur angulaire s de l'image en fonction des positions des points de marquage sur le secteur angulaire s sur les deux images. L'interpolateur polynomial de Lagrange est ensuite utilisé pour tenir compte de la dépendance en $\theta$, $\theta_s$ étant l'angle central du secteur angulaire s.

Si le terme correctif était déterminé en même temps que la fonction f il existerait une multiplicité d'écriture de l'ensemble sauf si la fonction f était contrainte. Or f donne une expression mathématique de la déformation globale. Le terme correctif représente le comportement physiologique et non pas la déformation cinématique.

Globalement, l'élasticité de l'expression mathématique est contrôlée par le choix de N, ordre de Fourier (N=3 est généralement suffisant) et, dans le cas où un terme correctif est introduit, par le nombre de secteurs angulaires considérés pour l'approche du terme correctif et le choix du degré du polynôme $\gamma_s$.

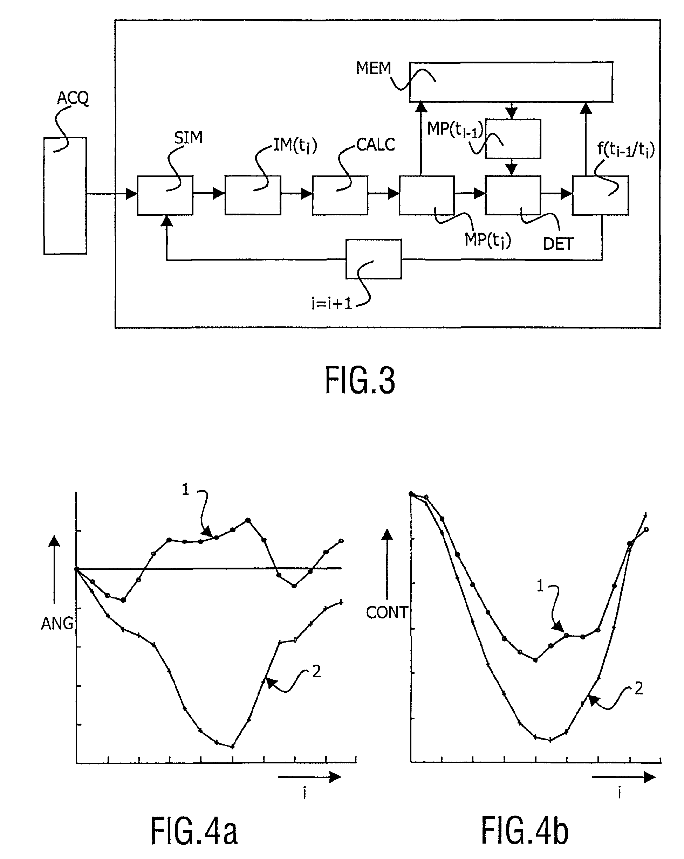

La figure 3 représente un appareillage de traitement d'images selon une mise en oeuvre particulière de l'invention. Cet appareillage est en relation avec des moyens de saisie ACQ de séquences SIM de X images. Cet appareillage incluent des moyens de calcul CALC des positions des points de marquage sur deux images successives ou non, et des moyens de détermination DET des paramètres d'une expression mathématique explicite de la déformation de l'organe ou de la partie de l'organe observée entre les deux images à partir des positions d'un ensemble de points de marquage sur les deux images, ledit ensemble de points de marquage contenant les points de marquage présents sur la surface de l'organe ou au moins les points de marquage présents sur une partie de cette surface.

Dans la mise en oeuvre particulière représentée sur la figure 3, le procédé décrit dans la figure 1 pour deux images successives ou non est itéré sur l'ensemble des images successives $IM(t_i)$ de la séquence d'image SIM. Après une initialisation pour un compteur initialisé à i=0, où les positions des points de marquage MP(0) sont calculées et stockées dans la mémoire MEM, le processus décrit ci-après est amorcé avec i=1. Cette initialisation n'est pas explicitement représentée sur la figure car elle est le cas particulier du schéma général où i=0, où f est la fonction nulle et où $MP(t_{i-1})=MP(0)$.

Une image $IM(t_i)$ est extraite de la séquence d'images SIM. Les positions des points de marquage $MP(t_i)$ sont calculés par des moyens de calcul CALC. Ces positions sont stockées dans une mémoire MEM et sont fournies à des moyens de détermination DET d'une expression mathématique de la déformation. Les positions d'un ensemble de points de marquage $MP'(t_{i-1})$ de l'image précédente $IM(t_{i-1})$ sont extraits de la mémoire MEM et fournis aux moyens DET pour la détermination de l'expression de la déformation $f(t_{i-1}; t_i)$. Dans la mise en oeuvre représentée sur la figure 3, l'expression mathématique de la déformation est ensuite stockée dans la mémoire MEM et le compteur est incrémenté à i=i+1.

L'itération de la détermination de la déformation sur une séquence SIM permet d'évaluer les paramètres de la déformation et leur évolution dans le temps. L'expression mathématique de la déformation inclut entre autres les paramètres de rotation et de contraction rigides qui sont inclus dans le paramètre complexe $a_1$. La connaissance de ces paramètres et de leur évolution permet de les extraire de l'expression et de les tracer en fonction du temps. Les figures 4a et 4b représentent respectivement sur deux graphes l'évolution temporelle en fonction de i de la rotation ROT et de la contraction CONT extraites de $a_1$ pour deux séquences d'images IM(i), chacune étant prises pour deux endroits particulier du coeur : la base (courbe 1) et l'apex (courbe 2). L'extraction de ces paramètres et leur affichage demandent des connaissances à la portée de l'homme du métier. Ces graphes sont particulièrement utiles pour le praticien qui peut ainsi visualiser la déformation globale de l'organe au cours de la séquence. Dans l'exemple du coeur, le praticien visualise grâce à cet outil la déformation rigide globale du coeur et peut y détecter des anomalies.

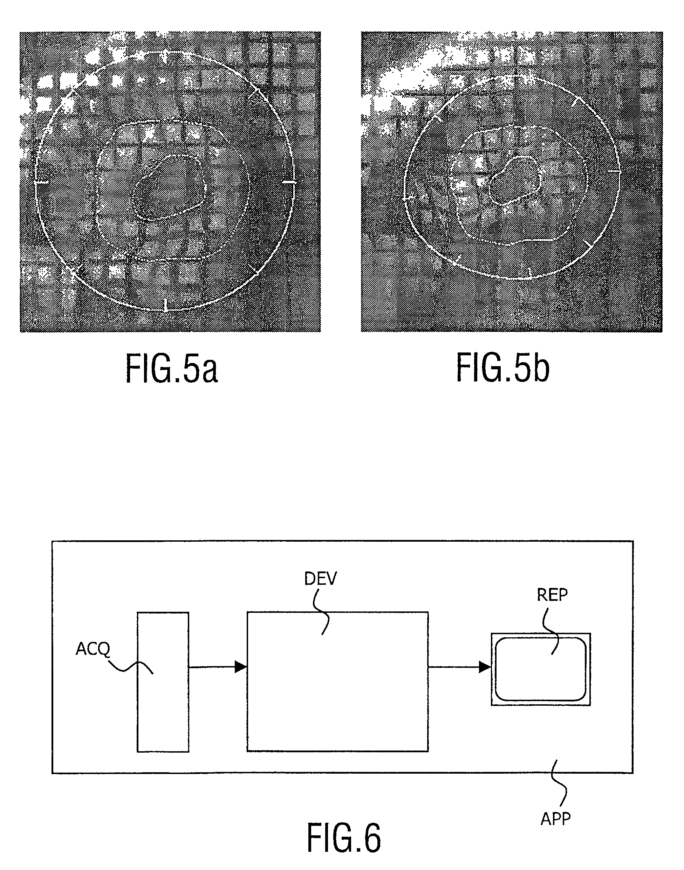

Conformément à la figure 5, il est aussi possible de visualiser la déformation globale avec ses composantes rigides et élastiques en appliquant à un cercle la partie de l'expression mathématique indépendante du rayon. Dans le mode de réalisation préféré, l'expression mathématique appliquée est de la forme :

$$f(z) = |z-o| \underbrace{\left( \sum_{\substack{k=-N \\ k \neq 0}}^{N} a_k e^{ik\theta} \right)}_{f_o(\theta)} + d \quad , \quad \theta = arg(z-o), \quad (a_k) \in C^{2N+1}$$

La visualisation de la déformation du cercle est, pour le praticien, un outil puissant et convivial de détection des anomalies de la déformation cardiaque. Un exemple de cette visualisation de la déformation est présentée sur les figures 5a, b, c et d.

La figure 7 représente un appareil APP de saisie d'images, ledit appareil comprenant des moyens ACQ d'acquisition de séquences d'au moins deux images d'un organe ou d'une partie d'un organe amené à se déformer dans le temps, ledit organe ou ladite partie de l'organe étant visible sur les images sous la forme d'une surface appelée surface de l'organe, ladite surface incluant des points caractéristiques dont les correspondances sont déterminées d'une image à une autre de la séquence, des moyens REP de représentation visuelle de ces images, qui peut comprendre un mode vidéo pour suivre la déformation au cours de la séquence, un appareillage DEV de traitement d'images tel que décrit auparavant.

Les modules présentés auparavant pour réaliser les fonctions présentées dans les étapes du procédé selon l'invention peuvent être intégrés en tant qu'application additionnelle dans un appareil médical classique de résonance magnétique ou être mis en oeuvre dans un appareil indépendant destiné à être relié à un appareil médical classique de résonance magnétique pour réaliser les fonctions selon l'invention. Il existe de nombreuses façons de mettre en oeuvre les fonctions présentées dans les étapes des procédés selon l'invention par des moyens logiciels et/ou matériels accessibles à l'homme du métier. C'est pourquoi les figures sont schématiques. Ainsi, bien que les figures montrent différentes fonctions réalisées par différents blocs, cela n'exclut pas qu'un seul moyen logiciel et/ou matériel permette de réaliser plusieurs fonctions. Cela n'exclut pas non plus qu'une combinaison de moyens logiciels et/ou matériels permette de réaliser une fonction. Bien que cette invention ait été décrite en accord avec les modes de réalisation présentés, un homme du métier reconnaîtra immédiatement qu'il existe des variantes aux modes de réalisation présentés et que ces variantes restent dans l'esprit et sous la portée de la présente invention. Ainsi, de nombreuses modifications peuvent être réalisées par un homme du métier sans pour autant s'exclure de l'esprit et de la portée définies par les revendications suivantes.

## Revendications

1. Procédé de traitement d'images appartenant à une séquence d'au moins deux images présentant une surface représentative d'un organe ou d'une partie d'organe déformable dans le temps et appelée surface d'organe, ladite surface incluant des points caractéristiques, notés points de marquage, qui se correspondent d'une image à une autre de la séquence, ledit procédé comprenant des étapes de :

   - calcul des positions des points de marquage sur au moins, deux images successives ou non,
   - détermination des paramètres d'une expression mathématique explicite de la déformation de l'organe ou de la partie de l'organe observée entre les deux images à partir des positions d'un ensemble de points de marquage sur les deux images, ledit ensemble de points de marquage contenant les points de marquage présents sur la surface de l'organe ou au moins les points de marquage présents sur une partie de la surface de l'organe.

2. Procédé de traitement d'images selon la revendication 1 **caractérisé en ce que** ledit organe est marqué par modulation spatiale de résonance magnétique, ledit marquage étant visible sur les images sous la forme de lignes de marquage, lesdites lignes de marquage se déformant en suivant la déformation de l'organe et étant telles qu'il existe des points d'intersection entre lesdites lignes de marquage, lesdits points d'intersection étant les points de marquage.

3. Procédé de traitement d'images selon l'une des revendications 1 et 2, caractérisé en ce l'expression de la déformation est définie dans le plan complexe.

4. Procédé de traitement d'images selon la revendication 3, **caractérisé en ce que** ladite expression mathématique de la déformation est de la forme

$$f(z) = |z - o| \underbrace{\left( \sum_{\substack{k=-N \\ k \neq 0}}^{N} a_k e^{ik\theta} \right)}_{f_o(\theta)} + d \quad , \quad \theta = arg(z - o), \quad (a_k) \in C^{2N+1}$$

5. Procédé de traitement d'images selon l'une des revendications 3 et 4, **caractérisé en ce qu'**un terme correctif fonction du rayon et de l'angle polaire, est introduit dans l'expression mathématique de la déformation, ledit terme correctif incluant des paramètres déterminés a posteriori de la détermination de la première expression mathématique à partir d'un ensemble de points de marquage sur les deux images.

6. Appareillage de traitement d'images, ayant des moyens pour recevoir ou générer des images, lesdites images appartenant à une séquence d'au moins deux images présentant une surface représentative d'un organe ou d'une partie d'organe déformable dans le temps et appelée surface d'organe, ladite surface incluant des points caractéristiques, notés points de marquage, qui se correspondent d'une image à une autre de la séquence, ledit appareillage comprenant des moyens de :

calcul des positions des points de marquage sur au moins, deux images successives ou non,
détermination des paramètres d'une expression mathématique explicite de la déformation de l'organe ou de la partie de l'organe observée entre les deux images à partir des positions d'un ensemble de points de marquage sur les deux images, ledit ensemble de points de marquage contenant les points de marquage présents sur la surface de l'organe ou au moins les points de marquage présents sur une partie de la surface de l'organe.

7. Appareillage de traitement d'images selon la revendication 6, **caractérisé en ce que** ledit organe est marqué par modulation spatiale de résonance magnétique, ledit marquage étant visible sur les images sous la forme de lignes de marquage, lesdites lignes de marquage se déformant en suivant la déformation de l'organe et étant telles qu'il existe des points d'intersection entre lesdites lignes de marquage, lesdits points d'intersection étant les points de marquage.

8. Appareillage de traitement d'images selon la revendication 7, pour mettre en oeuvre un procédé selon l'une des revendications 3 à 5.

9. Appareillage de traitement d'images selon l'une de revendications 7 et 8 comprenant des moyens pour itérer le procédé décrit pour deux images successives ou non dans la revendication 1, sur l'ensemble des images successives de la séquence d'images.

10. Appareillage de traitement d'images selon la revendication 9, comprenant des moyens d'extraction des paramètres de l'expression mathématique de la déformation correspondant à des déformations rigides et des moyens de visualisation de l'évolution de ces paramètres au cours de la séquence.

11. Appareillage de traitement d'images selon l'une des revendication 7 à 10, comprenant des moyens de définition d'une structure linéique, des moyens d'application de l'expression mathématique de la déformation à ladite structure linéique et des moyens de visualisation de la déformation subie par ladite structure linéique.

12. Appareillage de traitement d'images selon la revendication 11, **caractérisé en ce que** ladite structure linéique est un cercle et **en ce que** les moyens d'application de l'expression mathématique de la déformation à ladite structure linéique n'appliquent que la partie dépendante de l'angle polaire au cercle.

13. Appareillage de traitement d'images selon la revendication 11, **caractérisé en ce que** ladite structure linéique est une structure linéique quelconque définie sur une des images de la séquence et **en ce que** la déformation est suivie sur l'ensemble des images successives de la séquence à l'aide des moyens d'application de l'expression mathématique de la déformation à ladite structure linéique appliquant en chaque point de la structure linéique, l'expression mathématique de la déformation valable en ce point.

14. Appareil de saisie et de traitement d'images, ledit appareil comprenant des moyens d'acquisition de séquence d'au moins deux images représentant une surface représentative d'un organe ou d'une partie d'organe déformable dans le temps et appelée surface d'organe, ladite surface Incluant des points caractéristiques, notés points de marquage, qui se correspondent d'une image à une autre de la séquence, des moyens de représentation visuelle de ces images, un appareillage de traitement d'images selon l'une des revendications 7 à 13.

15. Produit programme d'ordinateur comprenant des portions/moyens/instructions de code de programme pour l'exécution des étapes du procédé selon l'une des revendications 1 à 5 lorsque ledit programme est exécuté sur un ordinateur.

IM(t1)

IM(t2)

CALC

MP(t1)

MP(t2)

MP'(t1)

MP'(t2)

DET

f(t1/t2)

FIG.1

FIG.2

ACQ

MEM

SIM

IM(t$_i$)

CALC

MP(t$_{i-1}$)

f(t$_{i-1}$/t$_i$)

MP(t$_i$)

DET

i=i+1

# FIG.3

1

ANG

2

i

## FIG.4a

CONT

1

2

i

## FIG.4b

FIG.5a

FIG.5b

FIG.6

**Office européen** **RAPPORT DE RECHERCHE EUROPEENNE**

**des brevets**

Numéro de la demande

EP 02 07 5218

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,X | STUBER M ET AL: "Quantification of the local heartwall motion by magnetic resonance myocardial tagging" COMPUTERIZED MEDICAL IMAGING AND GRAPHICS, MAY-JUNE 1998, ELSEVIER, UK, vol. 22, no. 3, pages 217-228, XP000926324 ISSN: 0895-6111 * sections 1.1, 1.2, 2, 3.1, 3.3 * * figures 1-3 * | 1-3,6-15 | G06T7/20 |
| X | NAGEL E ET AL: "Myocardial tagging for the analysis left ventricular function" 4TH INTERNATIONAL SYMPOSIUM. `MAGNETIC RESONANCE IN CARDIOVASCULAR RESEARCH', WURZBURG, GERMANY, 24-26 SEPT. 1998, vol. 6, no. 2-3, pages 91-93, XP000926344 Magnetic Resonance Materials in Physics, Biology and Medicine, Sept. 1998, Elsevier, Netherlands ISSN: 1352-8661 * sections 1-3 * * figure 2 * | 1,2,6,7, 14,15 | |

--- -/--

DOMAINES TECHNIQUES RECHERCHES (Int.Cl.7)

G06T

Le présent rapport a été établi pour toutes les revendications

| Lieu de la recherche | Date d'achèvement de la recherche | Examinateur |
|---|---|---|
| BERLIN | 11 avril 2002 | Kröner, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

| | Office européen | RAPPORT DE RECHERCHE EUROPEENNE | Numéro de la demande |
|---|---|---|---|
| | des brevets | | EP 02 07 5218 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | CHANG T M ET AL: "Intermodality registration and fusion of liver images for medical diagnosis" PROCEEDINGS. INTELLIGENT INFORMATION SYSTEMS. IIS'97 (CAT. NO.97TB100201), PROCEEDINGS INTELLIGENT INFORMATION SYSTEMS. IIS'97, GRAND BAHAMA ISLAND, BAHAMAS, 8-10 DEC. 1997, pages 42-46, XP002178527 1997, Los Alamitos, CA, USA, IEEE Comput. Soc, USA ISBN: 0-8186-8218-3 * abrégé * * page 42, colonne de gauche, ligne 31 - colonne de droite, ligne 27 * * page 43, colonne de droite, ligne 9 - ligne 35 * * page 44, colonne de gauche, ligne 41 - colonne de droite, ligne 1 * --- | 1,6,15 | |
| X | CHRISTENSEN G E ET AL: "Large-deformation image registration using fluid landmarks" 4TH IEEE SOUTHWEST SYMPOSIUM ON IMAGE ANALYSIS AND INTERPRETATION, PROCEEDINGS 4TH IEEE SOUTHWEST SYMPOSIUM ON IMAGE ANALYSIS AND INTERPRETATION, AUSTIN, TX, USA, 2-4 APRIL 2000, pages 269-273, XP002178528 2000, Los Alamitos, CA, USA, IEEE Comput. Soc, USA ISBN: 0-7695-0595-3 * abrégé * * page 270, colonne de gauche, ligne 5 - colonne de droite, ligne 27; figure 1 * --- -/-- | 1,6,15 | DOMAINES TECHNIQUES RECHERCHES (Int.Cl.7) |

Le présent rapport a été établi pour toutes les revendications

| Lieu de la recherche | Date d'achèvement de la recherche | Examinateur |
|---|---|---|
| BERLIN | 11 avril 2002 | Kröner, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

# EP 1 225 545 A1

Office européen
des brevets

**RAPPORT DE RECHERCHE EUROPEENNE**

Numéro de la demande

EP 02 07 5218

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | CARRILLO A ET AL: "Semiautomatic 3-D image registration as applied to interventional MRI liver cancer treatment" IEEE TRANSACTIONS ON MEDICAL IMAGING, MARCH 2000, IEEE, USA, vol. 19, no. 3, pages 175-185, XP002178529 ISSN: 0278-0062 * page 175, colonne de droite, ligne 3 - ligne 4 * * page 175, colonne de droite, ligne 30 - ligne 35 * * sections II.A., II.B.1) * ----- | 1,6,15 | |
| | | | **DOMAINES TECHNIQUES RECHERCHES (Int.Cl.7)** |

Le présent rapport a été établi pour toutes les revendications

| Lieu de la recherche | Date d'achèvement de la recherche | Examinateur |
|---|---|---|
| BERLIN | 11 avril 2002 | Kröner, S |

EPO FORM 1503 03.82 (P04C02)